# EUROPEAN PATENT APPLICATION

(11) **EP 4 184 631 A1**
(43) Date of publication of application: **24.05.2023**
(21) Application number: 21842914.0
(22) Date of filing: 17.05.2021
(51) Int. Cl.: H01M 10/04, H01M 50/178

(54) **TERMINAL RESIN FILM AND POWER STORAGE DEVICE USING SAME**

(30) Priority: 15.07.2020 JP 2020121458
(71) Applicant: TOPPAN INC., Tokyo 110-0016 (JP)
(72) Inventor: IMAMOTO Junya, Tokyo 110-0016 (JP)
(74) Representative: Hoffmann Eitle
(86) International application number: PCT/JP2021/018673
(87) International publication number: WO 2022/014140

(57) **Abstract**

There is provided a terminal resin film which is disposed covering part of an outer peripheral surface of a metal terminal that is electrically connected to a power storage device body configuring a power storage device. The terminal resin film includes a layer that contains an ultrahigh molecular weight polyolefin with a weight average molecular weight of 2.0 × 10⁵ to 1.0 × 10⁶.

## Description

### [Technical Field]

The present disclosure relates to terminal resin films, and power storage devices using the same.

### [Background Art]

In recent years, in response to an increasing need to downsize mobile devices and to effectively use electrical energy generated from renewable energy, research and development of lithium ion secondary batteries (a type of power storage devices) that can provide higher voltages and have high energy densities is underway.

Conventionally, metal cans have often been used as the packaging material used for such lithium ion secondary batteries. However, to meet the need for providing thinner and more diversified products to which the lithium ion secondary batteries are applied, pouched laminates in which a metal layer (such as an aluminum foil) and a resin film are laminated and which can be produced at low cost, have become mainstream packaging materials.

Laminate type lithium ion secondary batteries in which a battery body is accommodated and sealed in the packaging material mentioned above include terminals called tabs for outputting current. These tabs each include a metal terminal (also called tab lead) connected to a negative or positive electrode of the battery body and extending outside the packaging material, and a terminal resin film (also called tab sealant) partially covering the outer peripheral surface of the metal terminal (e.g., see PTLs 1 to 3). Usually, terminal resin films are fusion bonded to metal terminals.

### [Citation List]

### [Patent Literature]

PTL 1: JP 2008-4316 A
PTL 2: JP 2010-218766 A
PTL 3: JP 2009-259739 A

### [Summary of the Invention]

### [Technical Problem]

In recent years, metal terminal thickness is increasing with the increase of battery capacities, and therefore time to perform fusion bonding between a terminal resin film and a metal terminal tends to become longer. As the time of fusion bonding between a terminal resin film and a metal terminal becomes longer, the battery production efficiency is reduced accordingly, and this is not favorable. However, if the bonding duration is shortened in order to enhance the battery production efficiency, there may arise an issue of deteriorating adhesion between the terminal resin film and the metal terminal. Also, terminal resin films may form gels depending on the materials used, causing appearance defects, such as fish-eye defects.

The present disclosure aims to provide a terminal resin film improved in appearance and also improved in adhesion to a metal terminal even when the time to perform fusion bonding between the terminal resin film and the metal terminal is short (e.g., within five seconds), and to provide a power storage device using the same.

### [Solution to Problem]

In order to accomplish the aim of the preceding paragraph, the present disclosure provides a terminal resin film which is disposed covering part of an outer peripheral surface of a metal terminal that is electrically connected to a power storage device body configuring a power storage device, and this terminal resin film includes a layer that contains an ultrahigh molecular weight polyolefin with a weight average molecular weight of 2.0 × 10⁵ to 1.0 × 10⁶.

As a result of diligent studies, the present inventor has found out that, if the terminal resin film includes a layer containing an ultrahigh molecular weight polyolefin having a weight average molecular weight of 2.0 × 10⁵ to 1.0 × 10⁶, the terminal resin film may be improved in appearance, and adhesion to the metal terminal may be improved even when the time to perform fusion bonding between the terminal resin film and the metal terminal is short (e.g., within five seconds).

In the terminal resin film, the content of the ultrahigh molecular weight polyolefin may be 5 to 50 mass% with respect to the total mass of the terminal resin film. If the content of the ultrahigh molecular weight polyolefin is 5 to 50 mass% with respect to the total mass of the terminal resin film, the terminal resin film may be further improved in appearance, and adhesion between the terminal resin film and the metal terminal may be further improved.

In the terminal resin film, the ultrahigh molecular weight polyolefin may contain a polypropylene. If the ultrahigh molecular weight polyolefin contains a polypropylene, the terminal resin film may be further improved in appearance, and adhesion between the terminal resin film and the metal terminal may be further improved.

The terminal resin film may include a plurality of layers, at least one of the plurality of layers being a layer containing the ultrahigh molecular weight polyolefin. The terminal resin film may include an innermost layer disposed on a surface of a metal terminal, an outermost layer disposed on a surface on an opposite side to the innermost layer, and an intermediate layer disposed between the innermost layer and the outermost layer; and in the terminal resin film, the intermediate layer and/or the outermost layer may contain the ultrahigh molecular weight polyolefin, alternatively, only the intermediate layer may contain the ultrahigh molecular weight polyolefin among the innermost layer, the outermost layer, and the intermediate layer. If the intermediate layer and/or the outermost layer contain the ultrahigh molecular weight polyolefin, the terminal resin film may be further improved in appearance and adhesion between the terminal resin film and the metal terminal may be further improved, and if only the intermediate layer contains the ultrahigh molecular weight polyolefin, the terminal resin film may be even further improved in appearance, and adhesion between the terminal resin film and the metal terminal may be even further improved.

In the terminal resin film, the innermost layer may contain a resin having a polar group. If the innermost layer contains a resin having a polar group, adhesion between the terminal resin film and the metal terminal may be further improved.

In the terminal resin film, for a melt flow rate MFR1 of the innermost layer at 230°C, a melt flow rate MFR2 of the outermost layer at 230°C, and a melt flow rate MFR3 of the intermediate layer at 230°C, the MFR3 may be 0.1 to 2.5 g/10 min; and the difference between the MFR1 and the MFR3 (MFR1 - MFR3) and the difference between the MFR2 and the MFR3 (MFR2 - MFR3) may both be 5 to 30 g/10 min. If MFR3 is 0.1 to 2.5 g/10 min, and MFR1 - MFR3 and MFR2 - MFR3 are both 5 to 30 g/10 min, further improvement may be achieved in insulation properties of the intermediate layer, processability of the terminal resin film, and adhesion between the terminal resin film and the metal terminal.

In the terminal resin film, for a melting point Tm 1 of the innermost layer, a melting point Tm2 of the outermost layer, and a melting point Tm3 of the intermediate layer, the Tm3 may be 150 to 200°C; and the difference between the Tm3 and the Tm1 (Tm3 - Tm1) and the difference between the Tm3 and the Tm2 (Tm3 - Tm2) may both be 10 to 100°C. If Tm3 is 150 to 200°C, and Tm3 - Tm1 and Tm3 - Tm2 are both 10 to 100°C, further improvement may be achieved in insulation properties of the intermediate layer, processability of the terminal resin film, and adhesion between the terminal resin film and the metal terminal.

The terminal resin film may be formed using an inflation molding method.

The present disclosure also provides a power storage device, including: a power storage device body; metal terminals that are electrically connected to the power storage device body; a packaging material that sandwiches the metal terminals so as to be located between surfaces thereof, and accommodates the power storage device body therein; and the terminal resin film according to the present disclosure that covers part of an outer peripheral surface of the metal terminals, and is disposed between the metal terminal and the packaging material. In such a power storage device, the terminal resin film is improved in appearance and adhesion to a metal terminal is improved even when the time to perform fusion bonding between the terminal resin film and the metal terminal is short (e.g., within five seconds).

### [Advantageous Effects of the Invention]

The present disclosure can provide a terminal resin film improved in appearance and also improved in adhesion to a metal terminal even when the time to perform fusion bonding between the terminal resin film and the metal terminal is short (e.g., within five seconds). Furthermore, according to the present disclosure, a power storage device using the above terminal resin film can be provided.

### [Brief Description of the Drawings]

Fig. 1 is a schematic perspective view illustrating a configuration of a power storage device, according to the present embodiment.
Fig. 2 is a cross-sectional view illustrating an example of a cross section of the packaging material shown in Fig. 1.
Fig. 3 is a cross-sectional view taken along the line A-A of the terminal resin film and the metal terminal shown in Fig. 1.
Fig. 4 is a schematic diagram illustrating a method of producing a sample for measuring heat sealing strength in examples.

### [Description of the Embodiments]

With reference to the drawings, preferred embodiments of the present disclosure will be described. In the drawings, like components are given like reference signs to omit repeated explanation. Also, dimensional ratios in the drawings should not be limited to the ratios shown in the drawings.

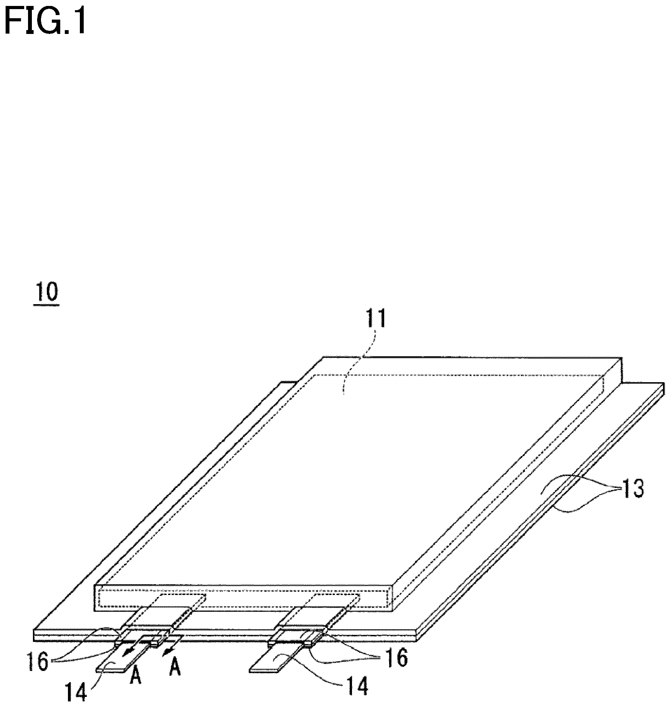

Fig. 1 is a schematic perspective view illustrating a configuration of a power storage device according to the present embodiment. Fig. 1 shows a lithium ion secondary battery as an example of a power storage device 10, referring to which the following description will be provided. The lithium ion secondary battery, whose configuration is shown in Fig. 1, may often be called a battery pack, a battery cell, or the like.

The power storage device 10 shown in Fig. 1 is a lithium ion secondary battery, and includes a power storage device body 11, a packaging material 13, a pair of metal terminals 14 (tab leads), and terminal resin films 16 (tab sealants).

The power storage device body 11 is a battery body that can be charged and discharged. The packaging material 13 sandwiches the metal terminals 14 between surfaces thereof and accommodates the power storage device body 11 therein. The packaging material 13 is disposed to cover the surfaces of the power storage device body 11 and make contact with part of the terminal resin films 16.

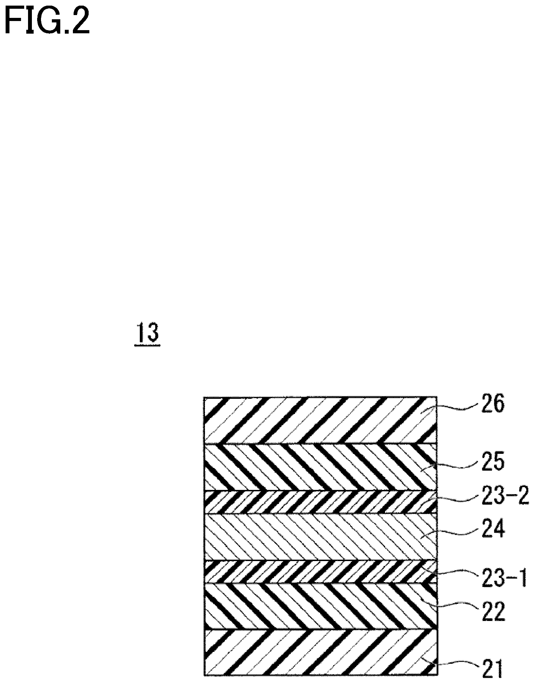

Fig. 2 is a cross-sectional view illustrating an example of a cross section of the packaging material shown in Fig. 1. In Fig. 2, the same components as those shown in Fig. 1 are given the same reference signs.

Referring to Fig. 2, an example of a configuration of the packaging material 13 will be described. The packaging material 13 has a seven-layer structure including an inner layer 21, an inner layer-side adhesive layer 22, an anticorrosion treatment layer 23-1, a barrier layer 24, an anticorrosion treatment layer 23-2, an outer layer-side adhesive layer 25, and an outer layer 26, which are laminated in this order from an inner side contacting the power storage device body 11.

The inner layer 21 is a sealant layer that imparts heat-sealing properties to the packaging material 13 due to heat sealing, that is, a layer disposed on the inside and heat sealed (thermally adhered) when assembling the power storage device 10. Base materials that can be used for the inner layer (sealant layer) 21 include, for example, polyolefin resins, and acid-modified polyolefin resins obtained by graft-modifying polyolefin resins with maleic anhydrides or the like. The polyolefin resins that can be used include: low-, medium- and high-density polyethylenes; ethylene-α-olefin copolymers; homo-, block- or random-polypropylenes; and propylene-α-olefin copolymers. Of these materials, the polyolefin resins are preferred to contain polypropylenes. These polyolefin resins can be used singly or in combination of two or more.

Depending on the required functions, the inner layer 21 may be a single-layer film or a multilayer film in which a plurality of layers are laminated. Specifically, the inner layer 21 may be a multilayer film interposed by a resin, such as an ethylene-cyclic olefin copolymer or polymethyl pentene, to impart moisture resistance. The inner layer 21 may contain various additives (flame retardants, slip agents, anti-blocking agents, antioxidants, light stabilizers, and tackifiers, etc.).

The inner layer 21 is preferred to have a thickness of 10 µm to 150 µm, and more preferably 30 µm to 80 µm. If the thickness of the inner layer 21 is 10 µm or more, sufficiently high adhesion can be achieved between surfaces of the packaging material 13 and between the packaging material 13 and each terminal resin film 16. If the thickness of the inner layer 21 is 150 µm or less, cost of the packaging material 13 can be reduced.

As the inner layer-side adhesive layer 22, a known adhesive can be appropriately selected and used, such as an adhesive for dry lamination, an acid-modified thermally adhesive resin, or the like.

As shown in Fig. 2, the anticorrosion treatment layers 23-1 and 23-2 are preferred to be formed on both surfaces of the barrier layer 24 from the perspective of performance; however, from the perspective of reducing cost, the anticorrosion treatment layer 23-1 may be disposed only on the inner layer-side adhesive layer 22 side surface of the barrier layer 24.

The barrier layer 24 may be a metal layer having electrical conductivity. Materials for the barrier layer 24 may include aluminum and stainless steel, of which aluminum is preferred from the perspective of cost, mass (density) and the like.

For the outer layer-side adhesive layer 25, polyurethane-based adhesives comprised mainly of polyester polyols, polyether polyols, acrylic polyols, or the like can be used.

The outer layer 26 may be a single-layer film of nylon, polyethylene terephthalate (PET), or the like, or a multilayer film thereof. Similarly to the inner layer 21, the outer layer 26 may contain various additives (flame retardants, slip agents, anti-blocking agents, antioxidants, light stabilizers, tackifiers, etc.). As a measure against electrolyte leakage, the outer layer 26 may include a protective layer formed by laminating a resin that is insoluble in an electrolyte, or by coating a resin component that is insoluble in an electrolyte.

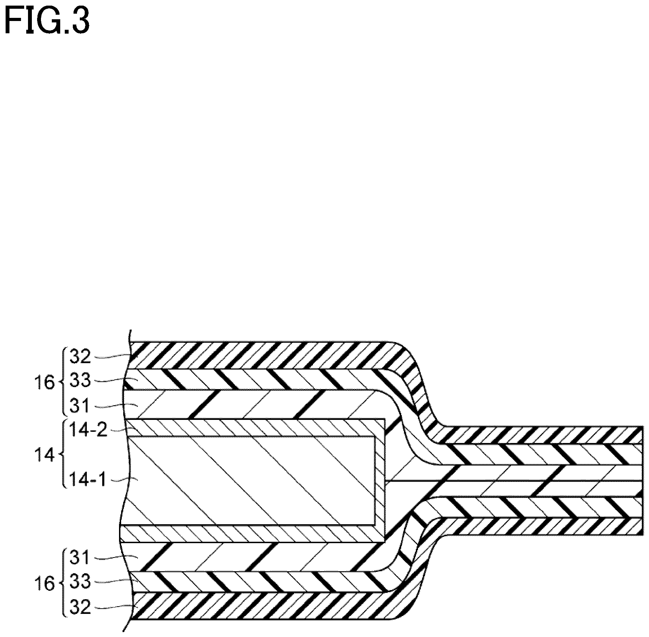

Fig. 3 is a cross-sectional view taken along the line A-A of the terminal resin film and the metal terminal shown in Fig. 1. In Fig. 3, the components identical with those of the structure shown in Fig. 1 are given the same reference signs.

As shown in Figs. 1 and 3, the pair (two in Fig. 1) of metal terminals 14 each include a metal terminal body 14-1 and an anticorrosion layer 14-2. Of the pair of metal terminal bodies 14-1, one metal terminal body 14-1 is electrically connected to a positive electrode of the power storage device body 11, and the other metal terminal body 14-1 is electrically connected to a negative electrode of the power storage device body 11. The pair of metal terminal bodies 14-1 extend away from the power storage device body 11, while being partially exposed from the packaging material 13. The pair of metal terminal bodies 14-1 may each have a plate-like shape, for example.

As materials for the metal terminal bodies 14-1, metals can be used. The material for the metal terminal bodies 14-1 can be determined considering the structure of the power storage device body 11, the materials of the components of the power storage device body 11, and the like.

If the power storage device 10 is a lithium ion secondary battery, aluminum can be used as a positive electrode current collector, and copper can be used as a negative electrode current collector. If the power storage device 10 is a lithium ion secondary battery, the material of the metal terminal body 14-1 connected to the positive electrode of the power storage device body 11 is preferred to be aluminum. Furthermore, from the perspective of corrosion resistance to the electrolyte, the material of the metal terminal body 14-1 connected to the positive electrode of the power storage device body 11 is preferred to be aluminum, such as 1N30, having purity of 97% or more. In addition, if the metal terminal body 14-1 is bent, an aluminum material which is tempered by sufficient annealing is preferred to be used for the purpose of imparting flexibility thereto. As the material for the metal terminal body 14-1 connected to the negative terminal of the power storage device body 11, copper with nickel plating layer formed on the surface, or nickel is preferred to be used.

The thickness of the metal terminal bodies 14-1 can be determined according to the size or capacity of the lithium ion secondary battery. If the lithium ion secondary battery is of a small size, the thickness of the metal terminal bodies 14-1 may be 50 µm or more. If the lithium ion secondary battery is of a large size such as for electrical storage or on-vehicle use, the thickness of the metal terminal bodies 14-1 can be appropriately determined in the range of 100 µm to 500 µm.

The anticorrosion layer 14-2 is disposed covering the surface of each metal terminal body 14-1. In lithium ion secondary batteries, the electrolytes contain corrosive components, such as LiPF₆. The anticorrosion layer 14-2 suppresses corrosion of the metal terminal body 14-1 due to the corrosive components, such as LiPF₆, contained in the electrolyte.

### [Terminal resin film]

As shown in Fig. 3, the terminal resin film 16 of the present embodiment is disposed covering part of the outer peripheral surface of the metal terminal 14. The terminal resin film 16 includes a layer which contains an ultrahigh molecular weight polyolefin having a weight average molecular weight of 2.0 × 10⁵ to 1.0 × 10⁶ (termed ultrahigh molecular weight polyolefin A hereinafter). If the terminal resin film 16 includes a layer containing an ultrahigh molecular weight polyolefin having a weight average molecular weight of 2.0 × 10⁵ to 1.0 × 10⁶, the terminal resin film may be improved in appearance, and may also be improved in adhesion to the metal terminal 14 even when the time to perform fusion bonding between the terminal resin film 16 and the metal terminal 14 is short (e.g., within five seconds). Furthermore, if the terminal resin film 16 includes a layer containing an ultrahigh molecular weight polyolefin, adhesion to the metal terminal 14 can be maintained even in a high temperature environment (e.g., 80°C).

In the present specification, the ultrahigh molecular weight polyolefin refers to a polyolefin having a molecular weight of 2.0 × 10⁵ (200,000) or more. The weight average molecular weight can be measured using a high-temperature gel permeation chromatography (GPC) device. As a method of measuring the weight average molecular weight, for example, an ultrahigh molecular weight polyolefin mixed with o-dichlorobenzene or trichlorobenzene is measured by passing it through the column at a temperature of 135 to 170°C, and then the measured value is converted using the calibration curve that is obtained using standard polystyrene or standard polyethylene.

The ultrahigh molecular weight polyolefin A may be an ultrahigh molecular weight linear polyolefin such as polyethylenes or polypropylenes, or an ultrahigh molecular weight cyclic polyolefin such as polynorbornenes. The ultrahigh molecular weight polyolefin A is preferred to be an ultrahigh molecular weight linear polyolefin from the perspective of improving the appearance of the terminal resin film. The ultrahigh molecular weight linear polyolefin may have a linear- or branched-chain form. The ultrahigh molecular weight polyolefin A may be a homopolymer, random copolymer or block copolymer. These ultrahigh molecular weight polyolefins A can be used singly or in combination of two or more.

The ultrahigh molecular weight polyolefin A is preferred to contain a polypropylene (ultrahigh molecular weight polypropylene) from the perspective of suppressing gel formation, improving the appearance of the terminal resin film, and further improving adhesion between the terminal resin film and the metal terminal at room temperature (25°C) and high temperature (80°C) and between the terminal resin film and the packaging material.

The ultrahigh molecular weight polypropylene may be a propylene homopolymer (homopolypropylene), ethylene-propylene block copolymer (block polypropylene), ethylene-propylene random copolymer (random polypropylene), copolymer of an α-olefin (other than ethylene and propylene) and propylene (propylene-based copolymer), and the like. The α-olefin as a monomer constituting the propylene-based copolymer may be 1-butene, 1-pentene, 3-methyl-1-butene, 1-hexene, 3-methyl-1-pentene, 4-methyl-1-pentene, or the like. The ultrahigh molecular weight polypropylene is preferred to contain an ultrahigh molecular weight homopolypropylene from the perspective of ease of low heat sealing with a metal terminal (low temperature, short time) and enhancing battery production efficiency.

The weight average molecular weight of the ultrahigh molecular weight polyolefin A is preferred to be 3.0 × 10⁵ or more, more preferred to be 4.0 × 10⁵ or more, even more preferred to be 5.0 × 10⁵ or more, and most preferred to be 6.0 × 10⁵ or more, from the perspective of suppressing gel formation and improving the appearance of the terminal resin film. The weight average molecular weight of the ultrahigh molecular weight polyolefin A is preferred to be 9.0 × 10⁵ or less, more preferred to be 8.0 × 10⁵ or less, and even more preferred to be 7.0 × 10⁵, from the perspective of further improving adhesion between the terminal resin film and the metal terminal at room temperature (25°C) and high temperature (80°C). From these perspectives, the weight average molecular weight of the ultrahigh molecular weight polyolefin A is preferred to be 3.0 × 10⁵ to 9.0 × 10⁵, more preferred to be 4.0 × 10⁵ to 8.0 × 10⁵, and even more preferred to be 5.0 × 10⁵ to 7.0 × 10⁵.

The ultrahigh molecular weight polyolefin A is preferred to have a molecular weight distribution (Mw/Mn) of 5 or more, more preferably 6 or more, and even more preferably 8 or more, that is a ratio between a weight average molecular weight (Mw) and a number average molecular weight (Mn) thereof, from the perspective of improving compatibility with resins other than the ultrahigh molecular weight polyolefin A (e.g., the base resins described later) to suppress gel formation and improve the appearance of the terminal resin film. The molecular weight distribution of the ultrahigh molecular weight polyolefin A is preferred to be 12 or less, and more preferred to be 10 or less, from the perspective of further improving adhesion between the terminal resin film and the metal terminal at room temperature (25°C) and high temperature (80°C). From these perspectives, the molecular weight distribution of the ultrahigh molecular weight polyolefin A is preferred to be 5 to 12, more preferred to be 6 to 12, and even more preferred to be 8 to 10. Similarly to the weight average molecular weight, the molecular weight distribution of the ultrahigh molecular weight polyolefin A can be measured using a GPC device.

The ultrahigh molecular weight polyolefin A is preferred to have a melting point (Tm) of 130 to 220°C, and more preferably 150 to 200°C, from the perspective of improving insulation properties of the terminal resin film, and further improving adhesion between the terminal resin film and the metal terminal at room temperature (25°C) and high temperature (80°C).

In the present specification, the melting point of a resin can be obtained by performing measurements using a differential scanning calorimeter (DSC), taking the peak having the largest calorific value to be a main peak, and reading its peak top temperature.

The content of the ultrahigh molecular weight polyolefin A is preferred to be 2 mass% or more, more preferred to be 5 mass% or more, and even more preferred to be 10 mass% or more, with respect to the total mass of the terminal resin film, from the perspective of suppressing gel formation and further improving the appearance of the terminal resin film. The content of the ultrahigh molecular weight polyolefin A is preferred to be 50 mass% or less, more preferred to be 30 mass% or less, and even more preferred to be 20 mass% or less, with respect to the total mass of the terminal resin film, from the perspective of further improving adhesion between the terminal resin film and the metal terminal at room temperature (25°C) and high temperature (80°C). From these perspectives, the content of the ultrahigh molecular weight polyolefin A is preferred to be 2 to 50 mass%, more preferred to be 5 to 50 mass%, and even more preferred to be 10 to 30 mass%, with respect to the total mass of the terminal resin film.

The terminal resin film may contain components other than the ultrahigh molecular weight polyolefin A in the layer that contains the ultrahigh molecular weight polyolefin A. The components other than the ultrahigh molecular weight polyolefin A may be resin compositions serving as bases (also termed base resins hereinafter). In other words, the terminal resin film may include a layer that contains the ultrahigh molecular weight polyolefin A and a base resin.

The base resin may be a polyolefin such as a polyethylene, polypropylene, polybutene, polymethylpentene, and polynorbornene. The polyolefin may be a homopolymer, random copolymer, or block copolymer. These polyolefins can be used singly or in combination of two or more.

The base resin is preferred to be a combined resin formulated to have compatibility with the ultrahigh molecular weight polyolefin A. For example, if the ultrahigh molecular weight polyolefin A is an ultrahigh molecular weight polypropylene, the base resin is preferred to contain a polypropylene, and if the ultrahigh molecular weight polyolefin A is an ultrahigh molecular weight polyethylene, the base resin is preferred to contain a polyethylene.

The base resin is preferred to contain a polypropylene from the perspective of improving heat resistance, flexibility, and adhesion between the terminal resin film and the metal terminal at room temperature (25°C) and high temperature (80°C) and between the terminal resin film and the packaging material. As the polypropylene, a homopolypropylene, random polypropylene, block polypropylene, or the like can be used. These polypropylenes may be used singly or in a combination of two or more types.

The weight average molecular weight of the base resin may be 1.0 × 10⁴ or more and less than 2.0 × 10⁵, or more preferably 1.2 × 10⁵ to 1.7 × 10⁵. The molecular weight distribution of the base resin may be 2 to 10, or more preferably 4 to 8.

The base resin is preferred to have a melting point (Tm) of 130 to 220°C, and more preferably 150 to 200°C, from the perspective of improving insulation properties of the terminal resin film, and further improving adhesion between the terminal resin film and the metal terminal at room temperature (25°C) and high temperature (80°C).

The content of the base resin may be 50 to 98 mass%, more preferably 50 to 95 mass%, and even more preferably 70 to 90 mass%, with respect to the total mass of the terminal resin film.

The terminal resin film may have a single layer structure or a multilayer structure. If the terminal resin film has a single layer structure, this film should be formed of only the layer containing the ultrahigh molecular weight polyolefin A. If the terminal resin film has a multilayer structure, at least one of the plurality of layers may contain the ultrahigh molecular weight polyolefin A, or all of the layers may contain the ultrahigh molecular weight polyolefin A. The terminal resin film is preferred to have a multilayer structure from the perspective of further improving insulation properties and adhesion between the terminal resin film and the metal terminal at room temperature (25°C) and high temperature (80°C) and between the terminal resin film and the packaging material.

As shown in Fig. 3, the terminal resin film 16 may include an innermost layer 31 contacting the outer peripheral surface of the metal terminal 14 (also termed first adhesive layer), an outermost layer 32 contacting the packaging material 13 (also termed second adhesive layer), and an intermediate layer 33 disposed between the innermost layer 31 and the outermost layer 32. The terminal resin film 16 may include three layers of the innermost layer 31, the outermost layer 32, and the intermediate layer 33, or may include four or more layers with other layers added.

The innermost layer 31, which is disposed covering the outer peripheral surface of the metal terminal 14, can seal the metal terminal 14 in the circumferential direction, and can adhere the terminal resin film 16 and the metal terminal 14 to each other. Furthermore, the outermost layer 32, which is fusion bonded to the packaging material 13, can seal the interior of the packaging material 13.

The terminal resin film is preferred to contain the ultrahigh molecular weight polyolefin A in the intermediate layer and/or the outermost layer, and is more preferred to contain the ultrahigh molecular weight polyolefin A only in the intermediate layer among the innermost, outermost and intermediate layers, from the perspective of further improving the appearance of the terminal resin film and adhesion between the terminal resin film and the metal terminal at room temperature (25°C) and high temperature (80°C).

### [Innermost layer]

In the terminal resin film, the innermost layer 31 is a layer disposed on the surface of the metal terminal. The innermost layer 31 is preferred to contain a resin having a polar group (also termed polar resin hereinafter), from the perspective of further improving adhesion to the metal terminal at room temperature (25°C) and high temperature (80°C).

The polar group may be a hydroxyl group, glycidyl group, amide group, imino group, oxazoline group, acid anhydride group, carboxyl group, ester group, or the like. From the perspective of reactivity, an acid anhydride group is preferred as the polar group, and the acid anhydride group is more preferred to be derived from a maleic anhydride.

Such a polar resin may be a modified polyolefin having a polar group, polyhydroxy polyolefin oligomer, ethylene/acrylic acid/glycidyl methacrylate copolymer, or the like. From the perspective of reactivity, the polar resin is preferred to be a polyolefin modified with an acid anhydride such as a maleic anhydride, or the like. The polyolefin may be a polypropylene, polyethylene, polybutene, polymethylpentene, polynorbornene, or the like. The polyolefin is preferred to contain a polypropylene from the perspective of further improving heat resistance, flexibility, and adhesion to the metal terminal at room temperature (25°C) and high temperature (80°C). These polar resins can be used singly or in combination of two or more.

The polypropylene may be a homopolypropylene, random polypropylene, block polypropylene, low regularity polypropylene, modified polypropylene, or the like. The modified polypropylene is a polypropylene having a polar group mentioned above. Of these polypropylenes, a random polypropylene, low regularity polypropylene, and modified polypropylene are preferred from the perspective of further improving heat resistance, flexibility, and adhesion to the metal terminal at room temperature (25°C) and high temperature (80°C). The modified polypropylene is preferred to be an acid-modified polypropylene, and more preferred to be an acid-modified random polypropylene, from the perspective of further improving heat resistance, flexibility, and adhesion to the metal terminal at room temperature (25°C) and high temperature (80°C).

Specific product examples of the polar resin may include Poval manufactured by Kuraray Co., Ltd. and Melthene-H manufactured by Tosoh Corporation as polar resins having a hydroxy group; Modiper manufactured by NOF Corporation and LOTADER and BONDINE manufactured by Arkema, Inc. as polar resins having a glycidyl group; APOLHYA manufactured by Arkema, Inc. as a polar resin having an amide group; ADMER IP manufactured by Mitsui Chemicals, inc. having an imino group; and EPOCROS manufactured by Nippon Shokubai Co., Ltd. as a polar resin having an oxazoline group. These polar resins can be used singly or in combination of two or more.

The melting point of the polar resin is preferred to be 80 to 180°C, more preferred to be 100 to 170°C, and even more preferred to be 120 to 165°C from the perspective of improving embeddability and heat resistance.

The content of the polar resin in the innermost layer is preferred to be 50 mass% or more, more preferred to be 80 mass% or more, and even more preferred to be 90 mass% or more, with respect to the total mass of the innermost layer, from the perspective of further improving adhesion to the metal terminal at room temperature (25°C) and high temperature (80°C). The content of the polar resin in the innermost layer may substantially be 100 mass% with respect to the total mass of the innermost layer.

The innermost layer may contain resins other than the polar resin. The resins other than the polar resin may include polyolefins such as polypropylenes, polyethylenes and polybutenes. The innermost layer may contain the ultrahigh molecular weight polyolefin A and a base resin. These resins other than the polar resin can be used singly or in combination of two or more.

The content of the resins other than the polar resin in the innermost layer may be 50 mass% or less with respect to the total mass of the innermost layer, and, from the perspective of suppressing deterioration in cohesion and maintaining sufficient adhesion to the metal terminal, more preferred to be 40 mass% or less, and even more preferred to be 20 mass% or less.

The innermost layer may contain additives other than the components mentioned above. The additives may be antioxidants, slip agents, flame retardants, light stabilizers, dehydrating agents, coloring pigments, tackifiers, fillers, and the like. These additives may be used singly or in combination of two or more. The coloring pigments may be carbon black, quinacridone pigments, polyazo pigments, isoindolinone pigments, and the like.

The thickness of the innermost layer is preferred to be 10 µm to 100 µm, and more preferred to be 15 µm to 50 µm. If the thickness of the innermost layer is 10 µm or more, adhesion to the metal terminal at room temperature (25°C) and high temperature (80°C) can be further improved. If the thickness of the innermost layer is 100 µm or less, cost of the terminal resin film can be suppressed.

The innermost layer may be a layer containing the ultrahigh molecular weight polyolefin A and a base resin. If the innermost layer is a layer containing the ultrahigh molecular weight polyolefin A, the content of the ultrahigh molecular weight polyolefin A may be 1 to 50 mass%, and more preferably 1 to 20 mass%, with respect to the total mass of the innermost layer.

### [Outermost layer]

In the terminal resin film, the outermost layer 32 is a layer disposed on a surface on the opposite side to the innermost layer. In other words, in the terminal resin film, the innermost layer 31 is a layer disposed on the surface of the packaging material. The outermost layer 32 is preferred to contain the polar resin described above from the perspective of improving adhesion to the packaging material. The polar resin is preferred to be a polyolefin having a polar group, and more preferred to be a polypropylene having a polar group, from the perspective of improving adhesion to the packaging material. Specific products of the polar resin include the polar resins mentioned above.

The melting point of the polar resin is preferred to be 80 to 180°C, more preferred to be 100 to 170°C, and even more preferred to be 120 to 165°C from the perspective of improving embeddability and heat resistance.

The content of the polar resin in the outermost layer is preferred to be 50 mass% or more, more preferred to be 80 mass% or more, and even more preferred to be 90 mass% or more, with respect to the total mass of the outermost layer, from the perspective of further improving adhesion to the metal terminal at room temperature (25°C) and high temperature (80°C). The content of the polar resin in the outermost layer may substantially be 100 mass% with respect to the total mass of the outermost layer.

The outermost layer is preferred to contain a polypropylene having a long-chain branched structure (also termed long-chain branched PP hereinafter) and a polypropylene not having a long-chain branched structure, from the perspective of improving adhesion to the packaging material at room temperature, and ease of maintaining sufficient adhesion to the packaging material even when exposed to high temperatures.

The long-chain branched PP refers to a polypropylene having a branched structure with molecular chains which have several tens or more carbons in the main chain and have a weight average molecular weight of several hundred or more. The polypropylene having a long-chain branched structure may be a homopolymer or a copolymer of a propylene. In the case of a propylene copolymer, the comonomer is preferred to be at least one type of olefin selected from the group consisting of ethylene and α-olefins having 4 to 10 carbons, and the content of the comonomer in the long-chain branched PP is preferred to be 3 mass% or less. The long-chain branched PP is preferred to be a propylene homopolymer from the perspective of improving heat resistance or rigidity.

The long-chain branched PP can be produced using an electron crosslinking method, or a synthesis method using a metallocene catalyst. From the perspective of suppressing gel formation and obtaining sufficient strength, the long-chain branched PP is preferred to be synthesized using a metallocene catalyst. Whether the long-chain branched PP has been synthesized using a metallocene catalyst can be confirmed by analyzing the catalyst residue through analysis such as infrared spectroscopy (IR), NMR spectroscopy, mass spectrometry (MS), X-ray analysis, and Raman spectroscopy.

The melting point of the long-chain branched PP is preferred to be 100 to 170°C, and more preferred to be 130 to 160°C, from the perspective of improving embeddability and heat resistance.

The content of the long-chain branched PP in the outermost layer is preferred to be 1 to 50 mass%, more preferred to be 3 to 30 mass%, and even more preferred to be 5 to 20 mass%, with respect to the total mass of the outermost layer. If the content of the long-chain branched PP is 1 mass% or more, foaming in the outermost layer can be further suppressed. If the content of the long-chain branched PP is 50 mass% or less, embeddability can be improved, sufficient adhesion to the packaging material can be maintained, and curling of the terminal resin film can be suppressed.

The polypropylene not having a long-chain branched structure refers to a polypropylene that does not correspond to the polypropylene having a long-chain branched structure described above. The polypropylene not having a long-chain branched structure may be a homopolypropylene, random polypropylene, block polypropylene, low regularity polypropylene, or the like. The polypropylene not having a long-chain branched structure may be a modified polypropylene.

The melting point of the polypropylene not having a long-chain branched structure is preferred to be 80 to 155°C, more preferred to be 100 to 150°C, and even more preferred to be 105 to 145°C, from the perspective of improving heat resistance or adhesion to the packaging material.

From the perspective of suppressing foaming in the outermost layer, the outermost layer is preferred to contain a filler. The filler may be an inorganic filler such as aluminum oxide, silicon oxide, magnesium oxide, zirconium oxide, calcium carbonate, zirconium silicate, zinc oxide, barium sulfate, copper oxide, cobalt oxide, titanium oxide, tin oxide, iron oxide, antimony oxide, boron nitride, aluminum nitride, or silicon nitride. These fillers may be used singly or in combination of two or more.

The filler is preferred to have an average particle size of 0.1 µm to 25 µm. The content of the filler is preferred to be 0.05 to 10 mass%, and more preferred to be 0.1 to 5 mass%, with respect to the total mass of the outermost layer. If the content of the filler is 0.05 mass% or more, decrease in adhesion to the packaging material can be further suppressed. If the content of the filler is 10 mass% or less, sufficient adhesion to the packaging material can be maintained.

Resins and additives other than those mentioned above may be added to the outermost layer. The additives may be antioxidants, slip agents, flame retardants, light stabilizers, dehydrating agents, coloring pigments, and tackifiers. These additives may be used singly or in combination of two or more. The coloring pigments may be carbon black, quinacridone pigments, polyazo pigments, isoindolinone pigments, and the like.

The thickness of the outermost layer is preferred to be 10 µm to 100 µm, and more preferred to be 15 µm to 50 µm. If the thickness of the outermost layer is 10 µm or more, adhesion to the packaging material can be further improved. If the thickness of the outermost layer is 100 µm or less, cost of the terminal resin film can be reduced.

The outermost layer may be configured with the same components as or different components from those of the innermost layer. The outermost layer may contain the ultrahigh molecular weight polyolefin A and a base resin. If the outermost layer is a layer containing the ultrahigh molecular weight polyolefin A, the content of the ultrahigh molecular weight polyolefin A may be 1 to 50 mass%, and more preferably 1 to 20 mass%, with respect to the total mass of the outermost layer.

### [Intermediate layer]

The intermediate layer 33 is a layer disposed between the innermost layer 31 and the outermost layer 32. The intermediate layer 33 may have a first surface covered with the innermost layer 31, and a second surface covered with the outermost layer 32.

The intermediate layer includes an insulating layer. The insulating layer is a layer preventing insulation properties from being deteriorated due to the sealant (the sealant layer of the packaging material and the innermost and outermost layers of the terminal resin film) flowing out during heat sealing and due to the exposed metal layer of the packaging material contacting the metal terminal. The insulating layer is preferred to be a layer containing the ultrahigh molecular weight polyolefin A.

Resins that can be used for forming the insulating layer may be polyolefins, polyamides, polycarbonates, polyphenylene ethers, and the like. Of these materials, the insulating layer is preferred to be formed of polyolefins, more preferably polypropylenes, and even more preferably block polypropylenes, from the perspective of further improving the appearance of the terminal resin film and adhesion between the terminal resin film and the metal terminal at room temperature (25°C) and high temperature (80°C). These resins can be used singly or in combination of two or more.

From the perspective of suppressing foaming in the intermediate layer, the insulating layer is preferred to contain a filler. As the filler, the inorganic fillers that can be used for the outermost layer can be used. The inorganic fillers may be used singly or in combination of two or more. The filler is preferred to have an average particle size of 0.1 µm to 25 µm. The content of the filler is preferred to be 0.1 to 30 mass%, and more preferred to be 1 to 15 mass%, with respect to the total mass of the intermediate layer. If the content of the filler is 0.1 mass% or more, adhesion to the metal terminal is prevented from being deteriorated, and if it is 30 mass% or less, sufficient embeddability can be maintained.

From the perspective of improving visibility of the terminal resin film, the insulating layer may contain a coloring pigment. Visibility improvement of the terminal resin film can contribute to improving accuracy in the examinations of the terminal resin film (specifically, examination of whether the terminal resin film is adhered to the metal terminal, or examination of the mounting position of the terminal resin film relative to the metal terminal). The coloring pigment may be copper oxide, cobalt oxide, zinc oxide, titanium oxide, carbon black, barium sulfate, quinacridone pigments, polyazo pigments, isoindolinone pigments, or the like.

The intermediate layer may have a single layer structure or a multilayer structure. In other words, the intermediate layer may have a multilayer structure including resin layers, other than the insulating layer, which are laminated via an adhesive, or laminated through other methods. The layers other than the insulating layer may be a layer containing a resin with a crosslinked structure (crosslinked layer), a layer containing a filler and/or fibers (reinforcing layer), and the like.

The crosslinked layer contains a resin with a crosslinked structure. The resin with a crosslinked structure may be a crosslinked acrylic resin, epoxy resin, phenol resin, urea resin, melamine resin, polyurethane resin, acid-modified polyolefin resin crosslinked with isocyanate or epoxy, or the like. These resins with a crosslinked structure can be used singly or in combination of two or more.

The reinforcing layer contains a filler and/or fibers. The reinforcing layer may be a layer in which a filler and/or fibers are dispersed in a polyolefin resin, a resin having a melting point of 200°C or higher, a resin having a crosslinked structure, or the like.

As the filler, the fillers that can be used for the insulating layer can be used. The content of the filler may be 0.5 to 20 mass% with respect to the total mass of the reinforcing layer.

As the fibers, those types of fibers which contain a cellulose resin, a resin having a melting point of 200°C or higher, or the like can be used. These types of fibers can be used singly or in combination of two or more. The fiber width (fiber diameter) of the fibers may be 10 nm to 10 µm. The content of the fillers may be 0.5 to 70 mass% with respect to the total mass of the reinforcing layer. The fibers may form non-woven fabric.

The thickness of the intermediate layer (thickness of the entire intermediate layer if the intermediate layer has a multilayer structure) may be 10 µm to 200 µm, and more preferably 20 µm to 100 µm. The thickness of the intermediate layer can be controlled according to the thicknesses of the metal terminal and the innermost layer, that is, if the thickness of the innermost layer or the metal terminal is large, the thickness of the intermediate layer 33 may be increased accordingly.

The total thickness of the innermost, outermost, and intermediate layers (thickness of the terminal resin film) is preferred to be 50 µm or more, and more preferred to be 80 µm or more, from the perspective of improving heat-sealing properties, embeddability of the metal terminal, and insulating properties, and is preferred to be 500 µm or less, and more preferred to be 300 µm or less, from the perspective of reducing cost and improving sealability.

In the case of the intermediate layer being an insulating layer, the thickness ratio between the innermost layer, intermediate layer, and outermost layer (innermost layer : intermediate layer : outermost layer) may be set to 2:1:2, 1:2:1, 1:1:1, etc. so that the innermost layer and the outermost layer have the same thickness. Furthermore, from the perspective of embeddability of the metal terminal, the thickness ratio between the innermost layer, intermediate layer, and outermost layer (innermost layer : intermediate layer : outermost layer) may be set to 3:1:1, 2:2:1, 5:3:2, etc. so that the thickness of the innermost layer contacting the metal terminal is larger than the thickness of the outermost layer, or from the perspective of adhesion to the packaging material, the thickness ratio may be set to 1:1:3, 1:2:2, 2:3:5, etc. so that the thickness of the outermost layer contacting the packaging material is larger than the thickness of the innermost layer.

If the innermost and outermost layers have the same thickness, the thickness ratio between these layers and the intermediate layer (innermost layer or outermost layer : intermediate layer) may be 1:3 to 3:1, and more preferably 1:2 to 2:1. If the innermost and outermost layers have different thicknesses, the thickness ratio between the innermost layer and the intermediate layer (innermost layer : intermediate layer) may be 4:1 to 1:1, and more preferably 3:1 to 1:1, and the thickness ratio between the outermost layer and the intermediate layer (outermost layer : intermediate layer) may be 1:3 to 3:1, and more preferably 1:2 to 2:1. If the innermost and outermost layers have different thicknesses, the thickness ratio between the innermost layer and the outermost layer (innermost layer : outermost layer) is preferred to be 1:5 to 9:2, more preferred to be 3:10 to 7:2, and even more preferred to be 2:5 to 5:2, from the perspective of suppressing curling of the terminal resin film. The thickness ratio of the innermost layer to the outermost layer (innermost layer / outermost layer) is preferred to be 0.2 to 4.5, more preferred to be 0.3 to 3.5, and even more preferred to be 0.4 to 2.5, from the perspective of suppressing curling of the terminal resin film.

In the terminal resin film, for the melt flow rate (MFR1) of the innermost layer at 230°C , the melt flow rate (MFR2) of the outermost layer at 230°C, and the melt flow rate (MFR3) of the intermediate layer at 230°C, MFR3 is preferred to be 0.1 to 2.5 g/10 min, and the difference between MFR1 and MFR3 (MFR1 - MFR3) and the difference between MFR2 and MFR3 (MFR2 - MFR3) are both preferred to be 5 to 30 g/10 min, from the perspective of further improving insulation properties of the intermediate layer, processability of the terminal resin film, and adhesion between the terminal resin film and the metal terminal at room temperature (25°C) and high temperature (80°C). The melt flow rate at 230°C can be measured according to the method of JIS K 7121-1987.

The melt flow rate of the intermediate layer at 230°C is preferred to be 0.2 g/10 min or more, and more preferred to be 0.5 g/10 min or more, from the perspective of ease of processing of the terminal resin film, and is preferred to be 1.5 g/10 min or less, and more preferred to be 1.0 g/10 min or less, from the perspective of suppressing flow of the intermediate layer and ease of maintaining insulation properties.

The difference in melt flow rate at 230°C between the innermost layer and the intermediate layer, and the difference in melt flow rate at 230°C between the outermost layer and the intermediate layer are preferred to be 5.5 g/10 min or more, and more preferred to be 6.0 g/10 min or more, from the perspective of improving embeddability of the metal terminal and further improving adhesion between the terminal resin film and the metal terminal at room temperature (25°C) and high temperature (80°C), and is preferred to be 20 g/10 min or less, more preferred to be 15 g/10 min or less, and even more preferred to be 10 g/10 min or less, from the perspective of improving processability of the terminal resin film.

In the terminal resin film, for the melting point (Tm1) of the innermost layer, the melting point (Tm2) of the outermost layer, and the melting point (Tm 3) of the intermediate layer, Tm3 is preferred to be 150 to 200°C, and the difference between Tm3 and Tm1 (Tm3 - Tm1) and the difference between Tm3 and Tm2 (Tm3 - Tm2) are both preferred to be 10 to 100°C from the perspective of further improving insulation properties of the intermediate layer, processability of the terminal resin film, and adhesion between the terminal resin film and the metal terminal at room temperature (25°C) and high temperature (80°C).

The melting point of the intermediate layer is preferred to be 185°C or less, and more preferred to be 170°C or less, from the perspective of ease of processing of the terminal resin layer, and is preferred to be 155°C or more, and more preferred to be 160°C or more, from the perspective of suppressing flow of the intermediate layer and ease of maintaining insulation properties.

The difference in melting point between the intermediate layer and the innermost layer and between the intermediate layer and the innermost layer are preferred to be 50°C or less, and more preferred to be 35°C or less, from the perspective of improving embeddability of the metal terminal and further improving adhesion between the terminal resin film and the metal terminal at room temperature (25°C) and high temperature (80°C), and is preferred to be 15°C or more, and more preferred to be 20°C or more, from the perspective of improving processability of the terminal resin film.

Some preferred embodiments of the present disclosure have so far been described; however, the present disclosure should not be construed as being limited to these specific embodiments, but may be modified or changed in various ways within the scope of the present disclosure recited in the claims.

For example, the terminal resin film 16 having a three-layer structure has been described in Fig. 3 as an example; however, a second intermediate layer containing the ultrahigh molecular weight polyolefin A, a base resin, and the like may be disposed between the intermediate layer 33 and the innermost layer 31, or between the intermediate layer 33 and the outermost layer 32. The second intermediate layer may be a crosslinked layer, a reinforcing layer, or the like mentioned above.

In this way, by forming a multilayer structure of four or more layers by disposing a second intermediate layer between the intermediate layer 33 and the innermost layer 31 or between the intermediate layer 33 and the outermost layer 32, insulation properties can be further improved between the intermediate layer 33 and the barrier layer 24 (metal layer) forming the packaging material 13 and between the intermediate layer 33 and the metal terminal 14.

A method of producing the terminal resin film 16 of the present embodiment will now be described. The method of producing the terminal resin film 16 should not be limited to the method described below. The terminal resin film 16 can be produced using an extruded film producing device having dies such as a round die used in the inflation molding method, or a T-die used in the extrusion die method, or other devices. From the perspective of suppressing thickness unevenness of the terminal resin film, the inflation molding method is preferred.

As an example of the method of producing the terminal resin film 16, a method of producing the terminal resin film 16 using the inflation molding method (i.e., method using an inflation molding device) will be described.

First, base materials of the innermost layer 31, the outermost layer 32, and the intermediate layer 33 are prepared. Next, the base materials of the innermost layer 31, the outermost layer 32, and the intermediate layer 33 are supplied to an inflation molding device. Next, the three base materials are extruded from an extrusion part of the inflation molding device to form a three-layer structure (structure in which the innermost layer 31, the outermost layer 32, and the intermediate layer 33 are laminated), with air supplied from inside the extruded three-layer structure laminate.

Then, the cylindrical terminal resin film 16 inflated in a cylindrical shape is deformed into a flat shape using a guide part and folded into a sheet shape using a pair of pinch rolls, while being transported. Then, slits are made at both ends of the folded tube, and the pair (two strips) of films are wound into a roll on the take-up core to produce a roll of terminal resin film 16.

The extrusion temperature is preferred to be in the range of 130 to 300°C, and more preferred to be 130 to 250°C. If the extrusion temperature is 130°C or more, the resins forming the layers sufficiently melt to reduce the melting viscosity, thereby stabilizing extrusion from the screws. If the extrusion temperature is 300°C or less, oxidization or deterioration of the resins forming the layers can be suppressed, and quality deterioration of the terminal resin film 16 can be prevented.

The revolution speed of the screws, blow ratio, pulling speed, and the like can be appropriately determined considering the film thickness. The thickness ratio of the layers of the terminal resin film 16 can be controlled by changing the revolution speed of the screws.

The terminal resin film 16 of the present embodiment may be produced through dry lamination using an adhesive, or through sandwich lamination in which deposited insulating layers (insulating films) are laminated with each other.

Referring to Fig. 3, a fusion bonding process of fusing and bonding the terminal resin film 16 of the present embodiment and the packaging material 13 to each other will be described. In the fusion bonding process, the outermost layer 32 is fused by heating, concurrently with which, the outermost layer 32 and the packaging material 13 are bonded to each other by pressing, so that the terminal resin film 16 and the packaging material 13 are fusion bonded to each other.

In the fusion bonding process, the outermost layer 32 is preferred to be heated to a temperature equal to or higher than the melting point of the resin forming the outermost layer 32 from the perspective of achieving sufficient adhesion and sealing between the terminal resin film 16 and the packaging material 13.

The heating temperature of the terminal resin film 16 may be, for example, 140 to 170°C. The processing time (total time of heating and pressing) can be determined considering adhesion to the packaging material and productivity. The processing time can be appropriately determined in the range, for example, of 1 to 60 sec.

From the perspective of improving production takt (productivity) of the terminal resin film 16, fusion bonding may be performed with a shorter pressing time at a temperature higher than 170°C. In this case, heating temperature can be, for example, higher than 170°C and 230°C or lower, and pressing time can be, for example, 3 to 20 sec.

Referring to Fig. 3, a fusion bonding process of fusing and bonding the terminal resin film16 of the present embodiment and the metal terminal 14 to each other will be described. In the fusion bonding process, the innermost layer 31 is fused by heating, concurrently with which, the innermost layer 31 and the metal terminal 14 are bonded to each other by pressing, so that the terminal resin film 16 and the metal terminal 14 are fusion bonded to each other.

In the fusion bonding process, the innermost layer 31 is preferred to be heated to a temperature equal to or higher than the melting point of the resin forming the innermost layer 31 from the perspective of achieving sufficient adhesion and sealing between the terminal resin film 16 and the metal terminal 14.

The heating temperature of the terminal resin film 16 may be, for example, 140 to 170°C. The processing time (total time of heating and pressing) can be determined considering adhesion to the metal terminal and productivity. The processing time can be appropriately determined in the range, for example, of 1 to 60 sec.

From the perspective of improving production takt (productivity) of the terminal resin film 16, fusion bonding may be performed with a shorter pressing time at a temperature higher than 170°C. In this case, the heating temperature can be, for example, higher than 170°C and 230°C or lower, and the pressing time can be, for example, 3 to 20 sec.

### Examples

The present disclosure will be described in detail below based on examples and comparative examples; however, the present disclosure should not be construed as being limited to the following examples.

### [Materials used]

Materials used in examples and comparative examples are shown in Table 1. In Table 1, PP represents polypropylene, Mw represents weight average molecular weight, Mw/Mn represents weight average molecular weight / number average molecular weight, MFR represents melt flow rate at 230°C, and Tm represents melting point.

**[Table 1]**

| Component | | Details | Mw | Mw/Mn | MFR (g/10 min) | Tm (°C) |
|---|---|---|---|---|---|---|
| Ultrahigh molecular weight | A1 | Homo PP | 2.5×10⁵ | 8.1 | 1 | 163 |
| | A2 | Homo PP | 3.8×10⁵ | 9 | 0.9 | 164 |
| | A3 | Homo PP | 6.5×10⁵ | 8.5 | 0.6 | 164 |
| polyolefin | A4 | Homo PP | 6.4×10⁵ | 5.2 | 0.6 | 163 |
| | A5 | Homo PP | 9.2×10⁵ | 11 | 0.2 | 165 |
| | A6 | Homo PP | 1.7×10⁵ | 9.1 | 0.1 | 166 |
| | A7 | Random PP (Propylene-ethylene random copolymer) | 4.8×10⁵ | 8.1 | 1.1 | 145 |
| | A8 | High-density polyethylene (HDPE) | 9.4×10⁵ | 8 | 1.5 | 135 |
| Base resin | B1 | Acid-modified random PP (Polar resin) | 1.2×10⁵ | 5.1 | 8 | 140 |
| | B2 | Random PP | 1.3×10⁵ | 5.6 | 8 | 140 |
| | B3 | Block PP | 1.7×10⁵ | 4.9 | 1 | 165 |
| | B4 | Homo PP | 1.5×10⁵ | 5.5 | 1.1 | 164 |

### [Preparation of terminal resin film]

### (Examples 1 to 20 and Comparative Examples 1 to 9)

The components shown in Tables 2 and 3 (unit: mass% which is expressed as % in the tables) were dry-blended with the amounts shown in the tables to prepare base materials for the individual resin layers. The melt flow rate of the layers at 230°C was measured according to the method of JIS K 7121-1987. MFR of the intermediate layer, the difference in MFR between the outermost layer and the intermediate layer, and the difference in MFR between the innermost layer and the intermediate layer are shown in Tables 2 and 3. Furthermore, when heat of fusion of the layers was measured using DSC, peaks corresponding to the melting points of the respective components were detected. The melting point of the intermediate layer, the difference in melting point between the intermediate layer and the outermost layer, and the difference in melting point between the intermediate layer and the innermost layer are shown in Tables 2 and 3.

Next, the base materials of the outermost layer, intermediate layer, and innermost layer were loaded on an inflation type extruded film producing device (Co-OI type) manufactured by Sumitomo Heavy Industries Modern Ltd., and the three base materials were extruded through this device to prepare a terminal resin film with a three-layer structure of outermost layer / intermediate layer / innermost layer (however, the terminal resin films of Example 19 and Comparative Example 9 had a single layer structure of only the intermediate layer). The melting temperature of the base materials was 210°C. The thicknesses of the layers in each of the terminal resin films of the examples were as shown in the column of Thk (µm) Om/Md/Im in Tables 2 and 3. Om/Md/Im in Tables 2 and 3 represents outermost layer (Om) / intermediate layer (Md) / innermost layer (Im).

### [Evaluation for gel (appearance)]

Fish-eye defects caused when producing the terminal resin films were evaluated according to the following criteria. If the evaluation was A, B or C, the film was determined to be above the pass level, and if D, the film was determined to be below the pass level. The results are shown in Tables 2 and 3.
A: The number of fish-eye defects with the major axis of 0.5 µm or more was 2/m² or less.
B: The number of fish-eye defects with the major axis of 0.5 µm or more was 3 to 5/m².
C: The number of fish-eye defects with the major axis of 0.5 µm or more was 6 to 8/m².
D: The number of fish-eye defects with the major axis of 0.5 µm or more was 9/m² or more.

### [Measurement of initial (room temperature) heat sealing strength with leads]

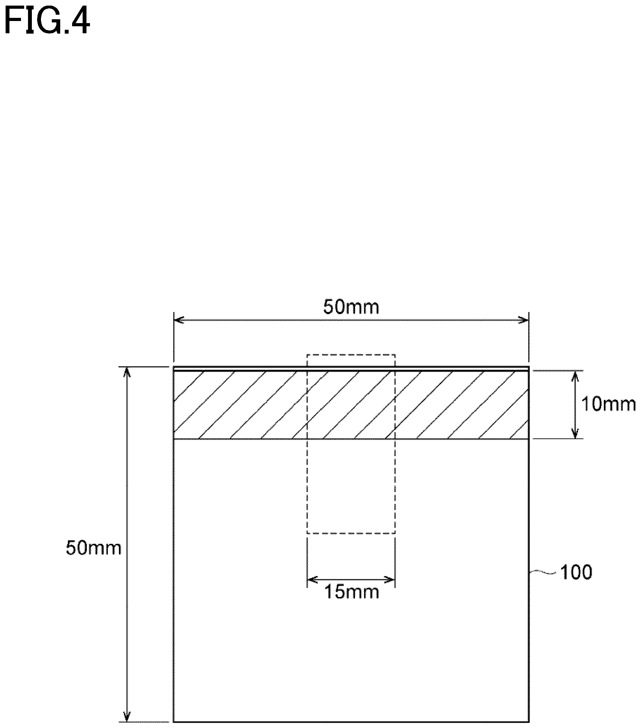

A sample obtained by cutting the terminal resin film to a size of 50 mm (TD) × 100 mm (MD) was folded in two so as to sandwich a chemically treated aluminum foil cut to a size of 50 mm × 50 mm, and the edge portion on the opposite side to the folded portion was heat sealed at 150°C / 0.6 MPa / 5 sec with a width of 10 mm. Thereafter, the heat sealed portion was cut to a width of 15 mm at the center portion thereof in the longitudinal direction (see Fig. 4) to prepare a sample for heat sealing strength measurement. In the present evaluation, the laminate 100 in Fig. 4 is a laminate of terminal resin film / aluminum foil / terminal resin film. The heat sealed portion of the sample was subjected to a T-peel test between the aluminum foil (lead) and the terminal resin film at room temperature (25°C) and a tensile speed of 50 mm/min using a tensile tester (manufactured by Shimadzu Corporation) according to JIS Z 1713. From the obtained results, the initial heat sealing strength with the leads was evaluated based on the following evaluation criteria. In the peeling strength measurement, displacement (peeling length) was plotted on the horizontal axis and peeling strength was plotted on the vertical axis, and a first local maximum of the peeling strength was adopted as a heat sealing strength. If the evaluation was A, B or C, the film was determined to be above the pass level, and if D, the film was determined to be below the pass level. The results are shown in Tables 2 and 3.
A: Heat sealing strength was 25 N/15 mm or more.
B: Heat sealing strength was 20 N/15 mm or more and less than 25 N/15 mm.
C: Heat sealing strength was 15 N/15 mm or more and less than 20 N/15 mm.
D: Heat sealing strength was less than 15 N/15 mm.

### [Measurement of heat-resistant (80°C) heat sealing strength with leads]

A sample obtained by cutting the terminal resin film to a size of 50 mm (TD) × 100 mm (MD) was folded in two so as to sandwich a chemically treated aluminum foil cut to a size of 50 mm × 50 mm, and the edge portion on the opposite side to the folded portion was heat sealed at 150°C / 0.6 MPa / 5 sec with a width of 10 mm. Thereafter, the heat sealed portion was cut to a width of 15 mm at the center portion thereof in the longitudinal direction (see Fig. 4) to prepare a sample for heat sealing strength measurement. In the present evaluation, the laminate 100 in Fig. 4 is a laminate of terminal resin film / aluminum foil / terminal resin film. The heat sealed portion of the sample was subjected to a T-peel test between the aluminum foil (lead) and the terminal resin film at 80°C and a tensile speed of 50 mm/min using a tensile tester (manufactured by Shimadzu Corporation) according to JIS Z1713. From the obtained results, the heat-resistant heat sealing strength with the leads was evaluated based on the following evaluation criteria. In the peeling strength measurement, displacement (peeling length) was plotted on the horizontal axis and peeling strength was plotted on the vertical axis, and a first local maximum of the peeling strength was adopted as a heat sealing strength. If the evaluation was A, B or C, the film was determined to be above the pass level, and if D, the film was determined to be below the pass level. The results are shown in Tables 2 and 3.
A: Heat sealing strength was 12.5 N/15 mm or more.
B: Heat sealing strength was 10 N/15 mm or more and less than 12.5 N/15 mm.
C: Heat sealing strength was 7.5 N/15 mm or more and less than 10 N/15 mm.
D: Heat sealing strength was less than 7.5 N/15 mm.

### [Evaluation for Insulation Properties]

Insulation properties between the negative electrode lead of the battery pack prepared as described above and the packaging material were measured using a tester. Insulation properties were evaluated based on the number of samples that caused short circuiting among 200 samples, according to the following evaluation criteria. If the evaluation was A, B or C, the film was determined to be above the pass level, and if D, the film was determined to be below the pass level. The results are shown in Tables 2 and 3.
A: The number of short-circuited samples was less than 2.
B: The number of short-circuited samples was 2 or more and less than 4.
C: The number of short-circuited samples was 4 or more and less than 6.
D: The number of short-circuited samples was 6 or more.

**[Table 2]**

| | Thk (µm) Om/Md/Im | Terminal resin film | | | | | | | | | | | | | Evaluation | | | |
|---|---|---|---|---|---|---|---|---|---|---|---|---|---|---|---|---|---|---|
| | | Om | | Md | | Im | | Mass% of Uh PO | MFR of Md (g/10 min) | Dif in MFR (g/10min) | | MP of Md | Dif in MP | | Gel (Ap) | Sl Str with leads | HR Sl Str with leads | Insul prop |
| | | Uh PO | Brsn | Uh PO | Brsn | Uh PO | Brsn | | | Om | Im | | Om | Im | | | | |
| E1 | 20/50/25 | - | B1 100% | A3 20% | B3 80% | - | B1 100% | 10.0% | 1.0 | 7.0 | 7.0 | 165°C | 25°C | 25°C | A | A | A | A |
| E2 | 20/50/25 | - | B1 100% | A7 20% | B3 80% | - | B1 100% | 10.0% | 1.1 | 6.9 | 6.9 | 165°C | 25°C | 25°C | A | A | A | A |
| E3 | 20/50/25 | - | B1 100% | A1 20% | B3 80% | - | B1 100% | 10.0% | 1.0 | 7.0 | 7.0 | 165°C | 25°C | 25°C | A | C | C | A |
| E4 | 20/50/25 | - | B1 100% | A2 20% | B3 80% | - | B1 100% | 10.0% | 1.0 | 7.0 | 7.0 | 165°C | 25°C | 25°C | A | B | B | A |
| E5 | 20/50/25 | - | B1 100% | A4 20% | B3 80% | - | B1 100% | 10.0% | 0.9 | 7.1 | 7.1 | 165°C | 25°C | 25°C | B | A | A | A |
| E6 | 20/50/25 | - | B1 100% | A5 20% | B3 80% | - | B1 100% | 10.0% | 0.8 | 7.2 | 7.2 | 165°C | 25°C | 25°C | C | A | A | A |
| E7 | 20/50/25 | - | B1 100% | A8 20% | B3 80% | - | B1 100% | 10.0% | 0.9 | 7.1 | 7.1 | 165°C | 25°C | 25°C | C | B | B | A |
| E8 | 20/50/25 | A3 40% | B1 60% | - | B3 100% | - | B1 100% | 10.0% | 1.0 | 4.0 | 7.0 | 165°C | 25°C | 25°C | C | B | B | A |
| E9 | 20/50/25 | A3 10% | B1 90% | A3 10% | B3 90% | A3 10% | B1 90% | 10.0% | 1.0 | 6.8 | 6.8 | 165°C | 25°C | 25°C | B | A | A | A |
| E10 | 20/50/25 | - | B1 100% | - | B3 100% | A3 40% | B1 60% | 10.0% | 1.0 | 7.0 | 4.0 | 165°C | 25°C | 25°C | C | C | C | A |
| E11 | 20/50/25 | - | B1 100% | A3 5% | B3 95% | - | B1 100% | 2.5% | 1.0 | 7.0 | 7.0 | 165°C | 25°C | 25°C | A | C | C | A |
| E12 | 20/50/25 | - | B1 100% | A3 80% | B3 20% | - | B1 100% | 40.0% | 0.7 | 7.3 | 7.3 | 164°C | 24°C | 24°C | B | A | A | A |
| E13 | 20/50/25 | - | B1 100% | A3 100% | - | - | B1 100% | 50.0% | 0.6 | 7.4 | 7.4 | 164°C | 24°C | 24°C | C | A | A | A |
| E14 | 20/50/25 | - | B1 100% | A3 20% | B4 80% | - | B1 100% | 10.0% | 1.0 | 7.0 | 7.0 | 164°C | 24°C | 24°C | A | A | A | A |
| E15 | 20/50/25 | - | B2 100% | A3 20% | B3 80% | - | B2 100% | 10.0% | 1.0 | 7.0 | 7.0 | 165°C | 25°C | 25°C | A | C | C | A |

| | | | | | | | | | | | | | | | | | | |
|---|---|---|---|---|---|---|---|---|---|---|---|---|---|---|---|---|---|---|
| E=Example; Thk=Thickness; Om=Outermost layer; Md= Intermediate layer; Im=Innermost layer; Uh PO=Ultrahigh molecular weight polyolefin; Brsn=Base resin; MP=melting point; Insul prop=Insulation properties; Sl Str=Sealing strength; HR=Heat resistant; Ap=Appearance | | | | | | | | | | | | | | | | | | |

**[Table 3]**

| | Thk (µm) Om/Md/Im | Terminal resin film | | | | | | | | | | | | | Evaluation | | | |
|---|---|---|---|---|---|---|---|---|---|---|---|---|---|---|---|---|---|---|
| | | Om | | Md | | Im | | Mass% of Uh PO | MFR of Md (g/10 min) | Dif in MFR (g/10min) | | MP of Md | Dif in MP | | Gel (Ap) | Sl Str with leads | HR Sl Str with leads | Insul prop |
| | | Uh PO | Brsn | Uh PO | Brsn | Uh PO | Brsn | | | Om | Im | | Om | Im | | | | |
| E16 | 20/40/40 | - | B1 100% | A3 25% | B3 75% | - | B1 100% | 10.0% | 1.0 | 7.0 | 7.0 | 165°C | 25°C | 25°C | A | A | A | A |
| E17 | 20/30/50 | - | B1 100% | A3 33% | B3 67% | - | B1 100% | 10.0% | 1.0 | 7.0 | 7.0 | 165°C | 25°C | 25°C | A | A | A | A |
| E18 | 50/100/50 | - | B1 | A3 | B3 | - | B1 | 10.0% | 1.0 | 7.0 | 7.0 | 165°C | 25°C | 25°C | A | A | A | A |
| | | | 100% | 20% | 80% | | 100% | | | | | | | | | | | |
| E19 | 0/100/0 | - | - | A3 10% | B1(45%)+ B3(45%) | - | - | 10.0% | 4.1 | - | - | 165°C | - | - | B | B | B | C |
| E20 | 25/50/25 | - | B1 100% | A3 20% | B1 80% | - | B1 100% | 10.0% | 6.5 | 0.5 | 0.5 | 140°C | 0°C | 0°C | A | C | C | C |
| CE1 | 25/50/25 | - | B1 100% | - | B3 100% | - | B1 100% | 0.0% | 1.0 | 7.0 | 7.0 | 165°C | 25°C | 25°C | A | D | D | A |
| CE2 | 25/50/25 | - | B1 100% | - | B4 100% | - | B1 100% | 0.0% | 1.0 | 7.0 | 7.0 | 164°C | 24°C | 24°C | A | D | D | A |
| CE3 | 25/50/25 | - | B1 100% | - | B3(80%)+ B4(20%) | - | B1 100% | 0.0% | 1.0 | 7.0 | 7.0 | 165°C | 25°C | 25°C | A | D | D | A |
| CE4 | 25/50/25 | - | B1 100% | A6 20% | B3 80% | - | B1 100% | 10.0% | 0.8 | 7.2 | 7.2 | 165°C | 25°C | 25°C | D | A | A | A |
| CE5 | 25/50/25 | - | B1 100% | A6 100% | - | - | B1 100% | 50.0% | 0.1 | 7.9 | 7.9 | 166°C | 26°C | 26°C | D | A | A | A |
| CE6 | 20/40/40 | - | B1 100% | - | B3 100% | - | B1 100% | 0.0% | 1.0 | 7.0 | 7.0 | 165°C | 25°C | 25°C | A | D | D | A |
| CE7 | 20/30/50 | - | B1 | - | B3 | - | B1 | 0.0% | 1.0 | 7.0 | 7.0 | 165°C | 25°C | 25°C | A | D | D | A |
| | | | 100% | | 100% | | 100% | | | | | | | | | | | |
| CE8 | 50/100/50 | - | B1 100% | - | B3 100% | - | B1 100% | 0.0% | 1.0 | 7.0 | 7.0 | 165°C | 25°C | 25°C | A | D | D | A |
| CE9 | 0/100/0 | - | - | - | B1(50%)+ B3(50%) | - | - | 0.0% | 4.5 | - | - | 165°C | - | - | A | D | D | C |

| | | | | | | | | | | | | | | | | | | |
|---|---|---|---|---|---|---|---|---|---|---|---|---|---|---|---|---|---|---|
| E=Example; CE=Comparative Example; Thk=Thickness; Om=Outermost layer; Md= Intermediate layer; Im=Innermost layer; Uh PO=Ultrahigh molecular weight polyolefin; Brsn=Base resin; MP=melting point; Insul prop=Insulation properties; Sl Str=Sealing strength; HR=Heat resistant; Ap=Appearance | | | | | | | | | | | | | | | | | | |

### [Reference Signs List]

- 10: Power storage device
- 11: Power storage device body
- 13: Packaging material
- 14: Metal terminal
- 14-1: Metal terminal body
- 14-2: Anticorrosion layer
- 16: Terminal resin film
- 21: Inner layer
- 22: Inner layer-side adhesive layer
- 23-1, 23-2: Anticorrosion treatment layer
- 24: Barrier layer
- 25: Outer layer-side adhesive layer
- 26: Outer layer
- 31: Innermost layer
- 32: Outermost layer
- 33: Intermediate layer

## Claims

1. A terminal resin film which is disposed covering part of an outer peripheral surface of a metal terminal that is electrically connected to a power storage device body configuring a power storage device, comprising
a layer that contains an ultrahigh molecular weight polyolefin with a weight average molecular weight of 2.0 × 10⁵ to 1.0 × 10⁶.

2. The terminal resin film according to claim 1, wherein a content of the ultrahigh molecular weight polyolefin is 5 to 50 mass% with respect to a total mass of the terminal resin film.

3. The terminal resin film according to claim 1 or 2, wherein the ultrahigh molecular weight polyolefin contains a polypropylene.

4. The terminal resin film according to any one of claims 1 to 3, comprising a plurality of layers, at least one of the plurality of layers being a layer containing the ultrahigh molecular weight polyolefin.

5. The terminal resin film according to any one of claims 1 to 4, comprising
an innermost layer disposed on a surface of a metal terminal, an outermost layer disposed on a surface on an opposite side to the innermost layer, and an intermediate layer disposed between the innermost layer and the outermost layer, wherein
the intermediate layer and/or the outermost layer contain the ultrahigh molecular weight polyolefin.

6. The terminal resin film according to claim 5, wherein only the intermediate layer contains the ultrahigh molecular weight polyolefin among the innermost layer, the outermost layer, and the intermediate layer.

7. The terminal resin film according to claim 5 or 6, wherein the innermost layer contains a resin having a polar group.

8. The terminal resin film according to any one of claims 5 to 7, wherein
for a melt flow rate MFR1 of the innermost layer at 230°C, a melt flow rate MFR2 of the outermost layer at 230°C, and a melt flow rate MFR3 of the intermediate layer at 230°C,
the MFR3 is 0.1 to 2.5 g/10 min; and
a difference between the MFR1 and the MFR3 (MFR1 - MFR3) and a difference between the MFR2 and the MFR3 (MFR2 - MFR3) are both 5 to 30 g/10 min.

9. The terminal resin film according to any one of claims 5 to 8, wherein
for a melting point Tm1 of the innermost layer, a melting point Tm2 of the outermost layer, and a melting point Tm3 of the intermediate layer,
the Tm3 is 150 to 200°C; and
a difference between the Tm3 and the Tm1 (Tm3 - Tm1) and a difference between the Tm3 and the Tm2 (Tm3 - Tm2) are both 10 to 100°C.

10. The terminal resin film according to any one of claims 1 to 9, wherein the terminal resin film is formed using an inflation molding method.

11. A power storage device, comprising:
a power storage device body;
metal terminals that are electrically connected to the power storage device body;
a packaging material that sandwiches the metal terminals so as to be located between surfaces thereof, and accommodates the power storage device body therein; and
the terminal resin film according to any one of claims 1 to 9 that covers part of an outer peripheral surface of the metal terminals, and is disposed between the metal terminal and the packaging material.
